(19)

Europäisches Patentamt
European Patent Office
Office européen des brevets

(11) **EP 3 202 743 A1**

(12) **EUROPEAN PATENT APPLICATION**

(43) Date of publication:
**09.08.2017 Bulletin 2017/32**

(21) Application number: **16290027.8**

(22) Date of filing: **05.02.2016**

(51) Int Cl.:
*C04B 28/02* (2006.01)　　　*C04B 28/04* (2006.01)
*C09K 8/42* (2006.01)　　　*C09K 8/467* (2006.01)
*C09K 8/473* (2006.01)　　　*C09K 8/48* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Services Pétroliers Schlumberger**
  **75007 Paris (FR)**
  Designated Contracting States:
  **FR**
• **Schlumberger Technology B.V.**
  **2514 JG The Hague (NL)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
• **Terrier, Cyril**
  **92140 Clamart (FR)**
• **Guillot, Dominique**
  **92140 Clamart (FR)**

(74) Representative: **Leonori, Céline**
  **Etudes et Productions Schlumberger**
  **Intellectual Property Department**
  **1, rue Henri Becquerel**
  **B.P. 202**
  **92142 Clamart Cedex (FR)**

(54) **CEMENT COMPOSITIONS WITH ADJUSTABLE MECHANICAL PROPERTIES**

(57)　Methods for adjusting the mechanical properties of cement systems include preparing a cement slurry containing water, an inorganic cement and at least two minerals. At least one of the minerals has a specific gravity higher than that of the cement at least one of the minerals has a specific gravity lower than that of the cement The slurry is allowed to harden and form a set cement. The concentrations of the cement and the minerals may be varied such that the slurry has a constant solid volume fraction and a constant slurry density.

EP 3 202 743 A1

**Description**

**BACKGROUND**

The statements in this section merely provide background information related to the present disclosure and may not constitute prior art.

This disclosure relates to cement compositions and methods for designing the compositions.

During the construction of subterranean wells, it is common, during and after drilling, to place a tubular body in the wellbore. The tubular body may comprise drillpipe, casing, liner, coiled tubing or combinations thereof. The purpose of the tubular body is to act as a conduit through which desirable fluids from the well may travel and be collected. The tubular body is normally secured in the well by a cement-sheath.

The cement sheath is normally placed in the annular region between the outside of the tubular body and the subterranean borehole wall by pumping the cement slurry down the interior of the tubular body, which in turn exits out the bottom of the tubular body and travels up into the annulus. The cement slurry may also be placed by the "reverse cementing" method, whereby the slurry is pumped directly down into the annular space.

The cement sheath provides mechanical support and hydraulic isolation between the zones or layers that the well penetrates. The latter function is prevents hydraulic communication between zones that may result in contamination. For example, the cement sheath blocks fluids from oil or gas zones from entering the water table and contacting drinking water. In addition, to optimize a well's production efficiency, it may be desirable to isolate, for example, a gas-producing zone from an oil-producing zone. The cement sheath achieves hydraulic isolation because of its low permeability. In addition, intimate bonding between the cement sheath and both the tubular body and borehole prevents leaks.

Bonding and zonal isolation may be adversely affected by various events that may occur during the life of a well. Expansion or contraction of the casing may result from pressure fluctuations during stimulation operations, or temperature changes owing to cement hydration or the pumping of fluids into or out of the well. Mechanical disturbances resulting from various well intervention operations or tectonic movement may also have negative consequences with regard to cement sheath integrity.

In order to ensure long-term zonal isolation, the mechanical properties of cement sheaths are optimally designed for a particular well environment. Such mechanical properties may include compressive strength, Young's modulus and Poisson's ratio. Parameters that may be adjusted to achieve the desired mechanical properties include cement concentration, slurry density, solid volume fraction (SVF), porosity, permeability, etc. The cement systems may have multimodal particle size distributions and may contain flexible particles. The SVF is the volume of solids divided by the total slurry volume (solids + liquid; Eq. 1).

$$SVF = \frac{v_{solids}}{v_{slurry}} \qquad\qquad (\text{Eq. 1})$$

Some cement systems may be foamed.

Cement slurry design may be iterative and may consume significant time and laboratory resources. Consequently, efficiency improvements in the process would be welcomed by the industry.

Further background information concerning well cementing and cement slurry design may be found in the following publications. Nelson EB, Drochon B, Michaux M and Griffin TJ: "Special Cement Systems," in Nelson EB and Guillot D (eds.): Well Cementing-2nd Edition, Houston: Schlumberger (2006): 233-268. Thiercelin M: "Mechanical Properties of Well Cements," in Nelson EB and Guillot D (eds.): Well Cementing-2nd Edition, Houston: Schlumberger (2006): 269-288. Piot B and Cuvillier G: "Primary Cementing Techniques," in Nelson EB and Guillot D (eds.): Well Cementing-2nd Edition, Houston: Schlumberger (2006): 459-501. Taylor HFW: "Chapter 8 - Structure and properties of fresh and hardened Portland cement pastes," in Taylor HFW (ed.): Cement chemistry - 2nd Edition, London: Thomas Telford Publishing (1997): 227-260.

**SUMMARY**

The present disclosure describes improved compositions and methods for designing cement systems for a particular well environment.

In an aspect, embodiments relate to methods for adjusting mechanical properties of a set cement. A cement slurry is prepared that comprises water, an inorganic cement and at least two minerals. At least one of the minerals has a specific gravity lower than that of the cement, and at least one of the minerals has a specific gravity higher than that of the cement. The slurry is allowed to harden and form a set cement. The concentrations of the cement and the minerals are varied such that the slurry has a constant SVF and a constant slurry density.

In a further aspect, embodiments relate to methods for cementing a subterreanean well. A cement slurry is prepared that comprises water, an inorganic cement and at least two minerals. At least one of the minerals has a specific gravity lower than that of the cement, and at least one of the minerals has a specific gravity higher than that of the cement. The minerals are chemically inert with respect to the cement. The slurry is allowed to harden and form a set cement. The slurry is placed in the well and allowed to harden and form a set cement. The concentrations of the cement and the minerals are varied such that the slurry has a constant SVF and a constant slurry density.

In yet a further aspect, embodiments relate to methods for treating a subterranean well. A cement slurry is prepared that comprises water, an inorganic cement and at least two minerals. At least one of the minerals has a specific gravity lower than that of the cement, and at least one of the minerals has a specific gravity higher than that of the cement. The minerals are chemically inert with respect to the cement. The slurry is allowed to harden and form a set cement. The slurry is placed in the well and allowed to harden and form a set cement. The concentrations of the cement and the minerals are varied such that the slurry has a constant SVF and a constant slurry density.

This summary is provided to introduce a selection of concepts that are further described below in the detailed description. This summary is not intended to identify key or essential features of the claimed subject matter, nor is it intended to be used as an aid in limiting the scope of the claimed subject matter.

## BRIEF DESCRIPTION OF THE DRAWINGS

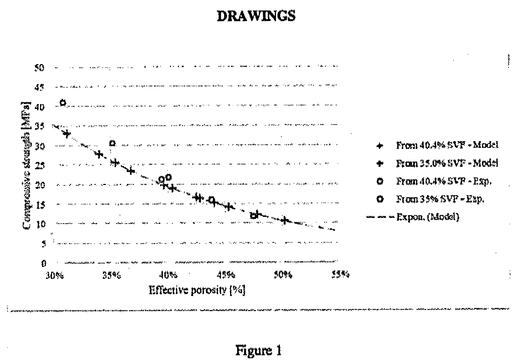

Figure 1 is a plot comparing theoretical vs. experimental compressive strength data from cement slurries with a constant SVF and slurry density.

## DETAILED DESCRIPTION

In the following description, numerous details are set forth to provide an understanding of the present disclosure. However, it may be understood by those skilled in the art that the methods of the present disclosure may be practiced without these details and that numerous variations or modifications from the described embodiments may be possible.

At the outset, it should be noted that in the development of any such actual embodiment, numerous implementation-specific decisions are made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary of the disclosure and this detailed description, each numerical value should be read once as modified by the term "about" (unless already expressly so modified), and then read again as not so modified unless otherwise indicated in context. The term about should be understood as any amount or range within 10% of the recited amount or range (for example, a range from about 1 to about 10 encompasses a range from 0.9 to 11). Also, in the summary and this detailed description, it should be understood that a concentration range listed or described as being useful, suitable, or the like, is intended that any concentration within the range, including the end points, is to be considered as having been stated. For example, "a range of from 1 to 10" is to be read as indicating each possible number along the continuum between about 1 and about 10. Furthermore, one or more of the data points in the present examples may be combined together, or may be combined with one of the data points in the specification to create a range, and thus include each possible value or number within this range. Thus, even if specific data points within the range, or even no data points within the range, are explicitly identified or refer to a few specific, it is to be understood that inventors appreciate and understand that any data points within the range are to be considered to have been specified, and that inventors possessed knowledge of the entire range and the points within the range.

Micronized minerals are frequently added to cement slurries. The primary role of such minerals is to modify the density of cement slurries. In addition, they may be used to enhance fluid-loss control and reduce permeability. The high surface area inhibits solids settling, thereby improving the stability of cement slurries. In the context of this application, slurry stability is the lack of solids segregation that may result in the formation of free fluid at the top of a cement column or a density gradient within the cement column.

The micronized minerals may include metallic iron dust (specific gravity = 7.0), hematite ($Fe_2O_3$; specific gravity = 4.95), haussmanite ($Mn_3O_4$; specific gravity = 4.9), ilmenite ($FeTiO_3$; specific gravity = 4.5), barite ($BaSO_4$; specific gravity = 4.3), titanium dioxide ($TiO_2$; specific gravity = 4.15), aluminum oxide ($Al_2O_3$; specific gravity = 4.0), calcite ($CaCO_3$; specific gravity = 2.7) and quartz ($SiO_2$; specific gravity = 2.65). The minerals may be used alone or in combination. If portland cement is present, quartz will become reactive at curing temperatures above about 110°C, leading to the conversion of the semi-crystalline binding phase, calcium silicate hydrate gel (CSH), to the calcium silicate hydrate mineral tobermorite $5CaO \cdot 6SiO_2 \cdot 5H_2O$). At temperatures above about 200°C, the stable calcium silicate hydrate mineral and binding phase is xonotlite ($6CaO \cdot 6SiO_2 \cdot H_2O$). Hematite and hausmannite react with xonotlite to form other minerals,

including andradite ($CaFeSi_3O_{12}$) and calcium manganese silicates such as johannsenite ($CaMnSi_2O_6$). Formation of these minerals is accompanied by a reduction of the cement compressive strength and an increase of cement permeability. Such effects are potentially detrimental to the set cement's ability to provide zonal isolation.

Alternate metal sulfate minerals that remain inert with respect to xonotlite at temperatures above 200°C, such as barite, may be used instead.

In this application, cement slurries are disclosed that comprise water, an inorganic cement and at least two minerals. As discussed above, the minerals may be micronized. The cement slurries have a constant SVF and density, and the mechanical properties may be adjusted by varying the concentrations of the cement and the minerals. The constant SVF and density also maintain uniform rheological properties, permeability and slurry stability. At least one of the minerals has a specific gravity lower than that of the cement; at least one of the minerals has a specific gravity higher than that of the cement.

Using the following equations, it is possible to (i) determine the effective porosity of a cement slurry and, therefore, its compressive strength and Young's modulus, and (ii) to shift the effective porosity toward higher values in order to modify these mechanical properties, while keeping the SVF and density constant. The following equations assume the presence of two inert minerals.

Effective porosity of set cement:

$$EP = \frac{v(H_2O) - 0.22\,m(cement)}{v(slurry)}, \qquad\qquad \text{(Eq. 2)}$$

where EP is the effective porosity of a set cement, $v(H_2O)$ is the volume of water in the slurry, $m(cement)$ is the mass of cement in the slurry and $v(slurry)$ is the total volume of the slurry.

Cement slurry density:

$$\rho = \frac{m(H_2O) + m(cement)}{v(H_2O) + v(cement)} \qquad\qquad \text{(Eq. 3)}$$

where $\rho$ is the cement slurry density.

Shifting the effective porosity from the original condition $EP$ to an adjusted effective porosity $EP_1$, the following equations calculate the mass of weighting agents 1 ($wa1$) and 2 ($wa2$) in order to shift the effective porosity by a factor $\alpha > 1$.

$$EP_1 = \alpha EP \qquad\qquad \text{(Eq. 4)}$$

$$m_1(wa1) + m_1(wa2) = m(cement) - m_1(cement) \qquad\qquad \text{(Eq. 5)}$$

$$m_1(cement) = \frac{1-\alpha}{0.22}v(H_2O) + \alpha m(cement) \qquad\qquad \text{(Eq. 6)}$$

$$\left(\frac{1}{\rho_{wa1}} - \frac{1}{\rho_{wa2}}\right)m_1(wa1) = (1-\alpha)\left(\frac{1}{\rho_{cement}} - \frac{1}{\rho_{wa2}}\right)\left(m(cement) - \frac{v(H_2O)}{0.22}\right) \quad \text{(Eq. 7)}$$

where $\rho_{wa1}$, $\rho_{wa2}$ and $\rho_{cement}$ are the densities of weighting agent 1, weighting agent 2 and the cement, respectively.

Eq. 5 is a mass conservation expression. Eq. 6 indicates the amount of cement to be placed into the adjusted system to increase its effective porosity by a factor $\alpha$. Eq. 7 is an SVF conservation expression converting from the original to the adjusted state, thus indicating the mass of weighting agent 1 to be used in the adjusted system. The mass of weighting agent 2 is then calculated from Eq. 3.

The equations presented above may be extended to a system containing $i \in [[2; n]]$, $n \in \mathbb{N}$ minerals. As there are two fixed parameters to this problem (the SVF and the slurry density), the space of solutions (the mass of each filler) is of dimension $i$-2; i.e., a unique couple of masses in case two minerals are used, a line in case three minerals are used, a plane in case four minerals are used, etc.

Referring to the Abrams and Bolomey equations, presented in Bolomey J: "Granulation et prévision de la résistance probable des bétons", in Bulletin technique de la Suisse Romande, March 28th, 1936, the compressive strength of set cement may be expressed as follows.

$$\log(CS) = \beta - \gamma EP , \qquad\qquad\qquad \text{(Eq. 8)}$$

where $\beta$ and $\gamma$ are coefficients to be adjusted as a function of the type of cement and as a function of the hydration rate of the cement.

For all aspects, the water may be fresh water, connate water, produced water, sea water or brines.

For all aspects, the SVF may be between 20% and 45%. The SVF may be between 25% and 45%. The SVF may be between 30% and 45%.

For all aspects, the slurry density may be between 1440 kg/m$^3$ and 1970 kg/m$^3$ (12.0 lbm/gal and 16.4 lbm/gal), or between 1560 kg/m$^3$ and 1970 kg/m$^3$ (13.0 lbm/gal and 16.4 lbm/gal).

For all aspects, the minerals may comprise metallic iron, haussmanite, ilmenite, barite, titanium dioxide, aluminum oxide, calcite or quartz or combinations thereof.

For all aspects, the inorganic cement may comprise portland cement, calcium aluminate cement, lime/silica blends, fly ash, blast furnace slag, zeolites, cement kiln dust, geopolymers or chemically bonded phosphate ceramics or combinations thereof.

\

For all aspects, the minerals may have a median particle size between 0.5 micrometer and 1 millimeter. The minerals may have a median particle size between 1 micrometer and 100 micrometers. The minerals may have a median particle size between 1 micrometer and 10 micrometers.

For all aspects, the cement may be present at a concentration between 60% and 95% by volume of solid blend (BVOB). The cement may be present at a concentration between 70% and 90% BVOB.

For all aspects, the composition may further comprise extenders, weighting agents, lost-circulation materials, dispersants, fluid-loss additives, antifoam agents, gas migration control agents, surfactants and gas generating agents.

The foregoing is further illustrated by reference to the following examples, which are presented for purposes of illustration and are not intended to limit the scope of the present disclosure.

## EXAMPLES

The following examples serve to further illustrate the disclosure.

Cement slurries were prepared and tested according to the recommended practice specified by the American Petroleum Institute (RP 10B). The cement was Dyckerhoff Class G (specific gravity = 3.2). Haussmanite (MICROMAX, available from Elkem AS, Oslo, Norway) was the mineral with a specific gravity higher than the cement. Calcite (SAFE-CARB-10, from MI-SWACO) was the mineral with a specific gravity lower than the cement. Compressive strength measurements were performed using a hydraulic press.

## EXAMPLE 1

A 1900 kg/m$^3$ (15.8 lbm/gal) base slurry was prepared that contained Dyckerhoff Class G cement, 4.1 L/tonne of cement antifoam agent, 6.7 L/tonne of cement polynaphthalene sulfonate dispersant and 0.1 % by weight of cement diutan extender. The SVF was 40.4%

Blend compositions containing various amounts of calcite and hausmannite were prepared, maintaining a constant slurry density and SVF (Table 1).

Table 1. Blend compositions and theoretical performance of cement systems with SVF = 40.4% and density = 1900 kg/m$^3$. BVOB = by volume of solid blend.

| Example | | Blend composition | | | | Set cement | |
|---------|---|-------------------|-------------------|----------------------|------------|------------------------|----------------------------|
| | # | Cement [%BVOB] | Calcite [%BVOB] | Hausmannite [%BVOB] | Temp. [°C] | Effective porosity [%] | Comp. Strength [MPa] |
| 1A | 1 | 100 | 0.0 | 0.0 | < 110 | 31.2 | 33.0 |
| 1B | 2 | 90 | 7.5 | 2.5 | < 110 | 34.0 | 27.8 |
| 1C | 3 | 85 | 11.3 | 3.7 | < 110 | 35.4 | 25.6 |
| 1D | 4 | 80 | 15.1 | 4.9 | < 110 | 36.8 | 23.5 |

(continued)

| Example | | Blend composition | | | Set cement | | |
|---|---|---|---|---|---|---|---|
| | # | Cement [%BVOB] | Calcite [%BVOB] | Hausmannite [%BVOB] | Temp. [°C] | Effective porosity [%] | Comp. Strength [MPa] |
| 1E | 5 | 70 | 22.7 | 7.3 | < 110 | 39.7 | 19.8 |
| 1F | 6 | 60 | 30.1 | 9.9 | < 110 | 42.5 | 16.7 |

A calculated theoretical compressive strength is also presented in Table 1. The theoretical strength is calculated as follows. From the original composition (#1 in Table 1), the value of $EP$ is calculated from Eq. 2. Taking the example of composition #5, the value of $\alpha$ is 1.53 to achieve an effective porosity $EP_1$ of 39.7% using Eq. 4. The mass of cement $m_1(cement)$ is then obtained from Eq. 6. Following, the mass of the first mineral in the new composition is obtained from Eq. 7. Finally, the mass of the second mineral is obtained from Eq. 5. Conversion from powder masses (cement and minerals) to powder volume fraction (%BVOB) is performed using the density of each component. The theoretical unconfined compressive strength in MPa is then determined using Eq. 8 with coefficients $\beta = 2.33$ and $\gamma = 2.60$.

Slurries 1, 3 and 5 from Table 1 were prepared in the laboratory and cured for 240 hr (10 days) at 85°C. The compressive strength of set-cement samples was measured according to the API procedure and the results were compared to the calculated theoretical values (Table 2). The theoretical model does not consider the presence of other cement additives including antifoam agents, dispersants, etc. This difference explains the discrepancy between the theoretical and experimental slurry porosities, as well as the theoretical and experimental compressive strengths.

Table 2. Experimental vs. theoretical compressive strengths of cement systems with SVF = 40.4% and density = 1900 kg/m$^3$.

| Example | | Designs | | Set cement - Theoretical | | Set cement - Experimental | |
|---|---|---|---|---|---|---|---|
| | # | SVF [%] | Temp. [°C] | Effective porosity [%] | Compressive strength [MPa] | Effective porosity [%] | Compressive strength [MPa] |
| 1G | 1 | 40.4 | 85 | 31.2 | 33.0 | 30.9 | 41.0 |
| 1H | 3 | 40.4 | 85 | 35.4 | 25.6 | 35.2 | 30.6 |
| 1I | 5 | 40.4 | 85 | 39.7 | 19.8 | 39.5 | 21.2 |

## EXAMPLE 2

A 1780 kg/m$^3$ (14.8 lbm/gal) base slurry was prepared that contained Dyckerhoff Class G cement, 4.1 L/tonne of cement antifoam agent, 6.7 L/tonne of cement polynaphthalene sulfonate dispersant and 0.1% by weight of cement diutan extender. The SVF was 35.0%

Blend compositions containing various amounts of calcite and hausmannite were prepared, maintaining a constant slurry density and SVF (Table 3).

Table 3. Blend compositions and theoretical performance of cement systems with SVF = 35.0% and density = 1780 kg/m$^3$.

| Example | | Blend composition | | | Set cement | | |
|---|---|---|---|---|---|---|---|
| | # | Cement [%BVOB] | Calcite [%BVOB] | Barite [%BVOB] | Temp. [°C] | Effective Porosity [%] | Comp. Strength [MPa] |
| 2A | 7 | 100 | 0.0 | 0.0 | <110 | 40.4 | 19.0 |
| 2B | 8 | 90 | 6.3 | 3.7 | <110 | 42.8 | 16.4 |
| 2C | 9 | 85 | 9.5 | 5.5 | <110 | 44.1 | 15.2 |
| 2D | 10 | 80 | 12.7 | 7.3 | <110 | 45.3 | 14.2 |
| 2E | 11 | 70 | 19.0 | 11.0 | <110 | 47.7 | 12.2 |
| 2F | 12 | 60 | 25.3 | 14.7 | <110 | 50.2 | 10.5 |

Slurries 7, 9 and 11 from Table 3 were prepared in the laboratory and cured for 24 hr at 85°C. The compressive strength was measured according to the API procedure and compared to the theoretical value (Table 4).

Table 4. Experimental vs. theoretical compressive strengths of cement systems with SVF = 35.0% and density = 1780 kg/m$^3$.

| Example | | Designs | | Set cement - Theoretical | | Set cement - Experimental | |
|---|---|---|---|---|---|---|---|
| | # | SVF [%] | Temperature [degC] | Effective porosity [%] | Compressive strength [MPa] | Effective porosity [%] | Compressive strength [MPa] |
| 2G | 7 | 35.0 | 85 | 40.4 | 19.0 | 40.1 | 21.8 |
| 2H | 9 | 35.0 | 85 | 44.1 | 15.2 | 43.8 | 16.0 |
| 2I | 11 | 35.0 | 85 | 47.7 | 12.2 | 47.5 | 11.7 |

A graphic comparison of theoretical vs. experimental compressive strengths is shown in Fig. 1. The data in both Examples 1 and 2 validate the concept of the present disclosure.

Although a few example embodiments have been described in detail above, those skilled in the art will readily appreciate that many modifications are possible in the example embodiments without materially departing from this disclosure. Accordingly, all such modifications are intended to be included within the scope of this disclosure as defined in the following claims.

**Claims**

1. A method for adjusting mechanical properties of a cement system, comprising:

   (i) preparing a cement slurry comprising water, an inorganic cement and least two minerals, wherein at least one of the minerals has a specific gravity lower than the cement arid at least one of the minerals has a specific gravity higher than the cement; and
   (ii) allowing the slurry to harden and form a set cement;

   wherein, the concentrations of the cement and the minerals are varied such that the slurry has a constant solid volume fraction and a constant slurry density, and the minerals are inert with respect to the cement.

2. The method of claim 1, wherein the solid volume fraction is between 20% and 45%.

3. The method of claim 1 or 2, wherein the slurry density is between 1440 kg/m$^3$ and 1970 kg/m$^3$.

4. The method of any one of claims 1-3, wherein the minerals comprise metallic iron, hematite, haussmanite, ilmenite, barite, titanium dioxide, aluminum oxide, calcite or quartz or combinations thereof.

5. The method of any one of claims 1-4, wherein the minerals have a median particle size between 1 micrometer and 1 millimeter.

6. The method of any one of claims 1-5, wherein the inorganic cement is present at a concentration between 60% and 95% by volume of solid blend.

7. The method of any one of claims 1-6, wherein the inorganic cement comprises portland cement, calcium aluminate cement, lime/silica blends, fly ash, blast furnace slag, zeolites, cement kiln dust, geopolymers or chemically bonded phosphate ceramics or combinations thereof.

8. A method for cementing a subterranean well, comprising

   (i) preparing a cement slurry comprising water, an inorganic cement and least two minerals, wherein at least one of the minerals has a specific gravity lower than the cement and at least one of the minerals has a specific gravity higher than the cement, and the minerals are chemically inert with respect to the cement;
   (ii) placing the slurry in the well; and
   (iii) allowing the slurry to harden and form a set cement;

wherein, the concentrations of the cement and the minerals are varied such that the slurry has a constant solid volume fraction and a constant slurry density.

9. The method of claim 8, wherein the solid volume fraction is between 20% and 45%

10. The method of claim 8 or 9, wherein the slurry density is between 1440 kg/m$^3$ and 1970 kg/m$^3$.

11. The method of any one of claims 8-10, wherein the minerals comprise metallic iron, haussmanite, ilmenite, barite, titanium dioxide, aluminum oxide, calcite or quartz or combinations thereof.

12. The method of any one of claims 8-11, wherein the minerals have a median particle size smaller than 10 micrometers.

13. The method of any one of claims 8-12, wherein the cement is present at a concentration higher than 60 percent by weight of blend.

14. The method of any one of claims 8-13, wherein slurry placement occurs during a primary cementing operation or a remedial cementing operation.

15. The method of any one of claims 8-14, wherein the inorganic cement comprises portland cement, calcium aluminate cement, lime/silica blends, fly ash, blast furnace slag, zeolites, cement kiln dust, geopolymers or chemically bonded phosphate ceramics or combinations thereof.

**DRAWINGS**

Figure 1

Europäisches
Patentamt

European
Patent Office

Office européen
des brevets

# EUROPEAN SEARCH REPORT

Application Number

EP 16 29 0027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 966 143 A1 (SCHLUMBERGER SERVICES PETROL [FR]; SCHLUMBERGER HOLDINGS [VG]; SCHLUMB) 13 January 2016 (2016-01-13) * paragraph [0006] - paragraph [0035]; claims 1-15; table 1 * ----- | 1-15 | INV. C04B28/02 C04B28/04 C09K8/42 C09K8/467 C09K8/473 C09K8/48 |
| X | EP 2 876 145 A1 (SERVICES PÉTROLIERS SCHLUMBERGER [FR]; SCHLUMBERGER TECHNOLOGY BV [NL]) 27 May 2015 (2015-05-27) * example 1: mix C in table 1; paragraph [0011] - paragraph [0022]; claims 1-15; example 1; tables 1,2 * ----- | 1-15 | |
| X | EP 2 586 754 A1 (SCHLUMBERGER SERVICES PETROL [FR]; SCHLUMBERGER TECHNOLOGY BV [NL]; SC) 1 May 2013 (2013-05-01) * example 1: mix 1-6 in table 2; paragraph [0008] - paragraph [0030]; claims 1-15; examples 1-4; tables 1-11 * ----- | 1,4,5,7, 8,11,12, 14,15 | |

TECHNICAL FIELDS
SEARCHED (IPC)

C04B
C09K

The present search report has been drawn up for all claims

| Place of search | Date of completion of the search | Examiner |
|---|---|---|
| The Hague | 8 June 2016 | Büscher, Olaf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 29 0027

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2016

| Patent document cited in search report | | Publication date | Patent family member(s) | | Publication date |
|---|---|---|---|---|---|
| EP 2966143 | A1 | 13-01-2016 | EP | 2966143 A1 | 13-01-2016 |
| | | | WO | 2016005610 A1 | 14-01-2016 |
| EP 2876145 | A1 | 27-05-2015 | EP | 2876145 A1 | 27-05-2015 |
| | | | WO | 2015078575 A1 | 04-06-2015 |
| EP 2586754 | A1 | 01-05-2013 | EP | 2586754 A1 | 01-05-2013 |
| | | | US | 2014367104 A1 | 18-12-2014 |
| | | | WO | 2013060798 A1 | 02-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Special Cement Systems. **NELSON EB ; DRO-CHON B ; MICHAUX M ; GRIFFIN TJ.** Well Cementing. 2006, 233-268
- Mechanical Properties of Well Cements. **THIERCE-LIN M.** Well Cementing. 2006, 269-288
- Primary Cementing Techniques. **PIOT B ; CUVILLI-ER G.** Well Cementing-. 2006, 459-501
- Structure and properties of fresh and hardened Portland cement pastes. **TAYLOR HFW.** Cement chemistry. Thomas Telford Publishing, 1997, 227-260
- **BOLOMEY J.** Granulation et prévision de la résistance probable des bétons. *Bulletin technique de la Suisse Romande,* 28 March 1936